# EUROPÄISCHE PATENTSCHRIFT

(11) **EP 3 011 102 B1**
(45) Veröffentlichungstag und Bekanntmachung des Hinweises auf die Patenterteilung: **19.12.2018**
(21) Anmeldenummer: 14727538.2
(22) Anmeldetag: 03.06.2014
(51) Int. Cl.: D21F 1/40, D21F 3/08, G01L 1/24, D21F 3/10, D21F 3/06, D21G 1/02

(54) **WALZE**
ROLLER
ROULEAU

(30) Priorität: 19.06.2013 DE 102013211472
(43) Veröffentlichungstag der Anmeldung: 27.04.2016
(73) Patentinhaber: Voith Patent GmbH, 89522 Heidenheim (DE)
(72) Erfinder: BISCHOF, Hubert, A-8680 Mürzzuschlag (AT); BREINEDER, Martin, A-2620 Natschbach (AT); SCHMITT, Matthias, 81476 München (DE)
(86) Internationale Anmeldenummer: PCT/EP2014/061419
(87) Internationale Veröffentlichungsnummer: WO 2014/202376

(56) Entgegenhaltungen:
- EP-A1- 1 640 624
- EP-A1- 2 267 219
- WO-A1-2010/034321
- WO-A1-2013/104600

## Beschreibung

Die Erfindung geht aus von einer Walze, insbesondere von einer Walze für eine Maschine zur Herstellung, Veredelung oder Weiterverarbeitung einer Faserbahn wie einer Papier-, Karton- oder Tissuebahn, nach dem Oberbegriff von Anspruch 1.

Walzen sind in derartigen Maschinen in vielen Positionen angeordnet und für verschiedene Verwendungszwecke ausgestaltet. Sie dienen vornehmlich der Führung von Bespannungen, welche die Faserbahn durch die Maschine tragen und leiten, aber auch zum Führen und Umlenken sowie Entwässern, Glätten und Trocknen der Faserbahn.

Die Qualität des Endproduktes hängt dabei stark von den wechselnden Parametern wie Feuchtequerprofil, Wasser- und Feststoffgehalt und anderen Größen der Faserbahn sowie den Parametern der Umgebung in der Maschine wie Temperatur, Luftfeuchtigkeit, Bahngeschwindigkeit etc. ab.

Diverse dieser Parameter sind aus dem Prozessleitsystem zu entnehmen und über dieses steuer- und regelbar, andere hingegen sind nicht direkt messbar, da an den entsprechenden Stellen keine Sensoren vorgesehen sind.

Da der Papiermacher ein vitales Interesse daran hat, derartige Parameter besser überwachen zu können, wurden in der Vergangenheit diverse Versuche unternommen, Sensoren direkt in Walzen, beispielsweise in Presswalzen, zu implementieren, um dadurch die Überwachung des Prozesses zu intensivieren, die Parameter für das Prozessleitsystem zugänglich zu machen und in weiterer Folge die Qualität des Endproduktes zu verbessern. Die Bezüge weicher Walzen sind aufgrund der elastischen Deformierbarkeit des Bezuges aus Gummi, Polyurethan oder Faserverbundwerkstoffen für derartige Maßnahmen geeignet.

Aus der EP 2 267 219 ist ein Sensorsystem für derartige Walzen bekannt.

Die verwendeten Sensoren können beispielsweise einfache Dehnmessstreifen sein, welche sich unter Belastung in ihrer Länge verändern, doch sind diese nicht für jede Walze anwendbar und auch nicht empfindlich genug, um z.B. geringe Schrägstellungen einer Walze zu messen.

Neuere Entwicklungen sehen vor, faseroptische Sensoren in Walzenbezüge zu integrieren. Hiermit ist eine Online-Bestimmung von Druck und Temperatur in einem Walzenpressspalt zwischen zwei gegeneinander laufenden Walzen möglich. Die Sensorik beruht auf den speziellen Reflexionseigenschaften von Faser-Bragg-Gittern (FBG), die eine Messung der Dehnung der Faser erlauben. Diese Dehnung ist proportional zum angelegten Druck und kann so zur Messung herangezogen werden. Die FBG-Sensoren werden mittels einer Breitband-Lichtquelle (SLED) beleuchtet und die Signale über einen Optokoppler zur Analyse auf ein Spektrometer geleitet. Ein derartiges System ist beispielweise in der WO -A-2010/034321 beschrieben. Beim Einbau der Sensoren in Papiermaschinenwalzen treten jedoch vielfältige Probleme auf. Ein sehr bedeutendes Problem ist die Signalabschwächung durch Biegung der Glasfasern.

Da in Reflektion gemessen wird und die Gitter nur eine Reflektivität von bis zu 20% aufweisen, muss die Wegstrecke von der Lichtquelle bis zum am weitesten entfernten FBG und zurück zum Spektrometer so verlustarm wie möglich gestaltet werden. Verluste treten dabei hauptsächlich durch Biegung der Faser in Form von Makrobiegung oder Mikrobiegung auf. Mikrobiegungen der Glasfaser entstehen dadurch, dass die Faser auf einen "rauen" Untergrund aufgelegt wird und mit weiteren Schichten abgedeckt wird.

Dieser Umstand tritt insbesondere in Walzen auf, bei welchen auf einem Walzenkern ein Bezug aus Gummi aufgebracht wird. Derartige Walzen finden sich beispielsweise in Streichaggregaten, in der Formiersektion und in der Presse. In der Vorbereitung wird der Walzenkern durch Sandstrahlen angeraut und danach ein Unterbau aus Hartgummi aufgebracht, auf welchem die Funktionsschicht aufgebaut wird. In einem anschließenden Vulkanisationsprozess wird die gesamte Walze in einem Ofen über längere Zeit erhitzt, die Strukturen oberhalb der Sensoren schrumpfen und pressen die Glasfaser in den rauen Untergrund. Dadurch wird die Glasfaser vielfach gebogen, wodurch das Signal an Intensität verliert oder sogar vollständig verschwindet.

Es ist entsprechend Aufgabe der Erfindung, Maßnahmen anzugeben, die die beschriebenen Probleme mildern oder vermeiden, indem die Walze so gestaltet wird, dass die Biegungen der Glasfaser vermindert und so die reflektierte Lichtausbeute gesteigert wird.

Erfindungsgemäß ist dabei vorgesehen, dass die zumindest teilweise aus einem Gummimaterial bestehende Walze nicht mit einem herkömmlichen Unterbau versehen wird, sondern dass auf dem Walzenkern unter der zumindest einen Funktionsschicht eine glatte Schicht aufgebracht ist. Das Sensorsystem kann dann auf dieser Schicht aufgelegt und fixiert werden.

Dadurch kann die Bildung von Microbendings vermieden werden und gleichzeitig eine gute Anhaftung der Funktionsschicht auf dem Unterbau aufrechterhalten werden. Das Sensorsystem ist gut geschützt vor Beschädigungen und kann weitgehend verlustfrei in Bezug auf die Intensität des reflektierten Lichts betrieben werden.

Weitere vorteilhafte Aspekte und Weiterbildungen der Erfindung gehen aus den Unteransprüchen hervor.

Gemäß vorteilhafter Aspekte der Erfindung kann die glatte Schicht aus einem faserverstärkten Epoxydharz oder aus einer dünnen, glatten Hartgummischicht bestehen.

Gemäß einem vorteilhaften Aspekt der Erfindung kann auf der Schicht und unter der Funktionsschicht eine weitere Schicht vorgesehen sein, wenn dies für die Funktion der Walze nötig ist.

Bevorzugt kann die Schicht aus einem Faserroving bestehen, welches mit einem Epoxidharz durchtränkt ist.

Besonders bevorzugt kann das Faserroving aus Glasfasern, Kohlefasern, Aramidfasern, Polyester oder Polyamid oder Mischungen daraus bestehen.

Die Schicht kann in für faserverstärkte Bezüge üblicher Weise hergestellt werden, indem die Schicht nach dem Aufbringen gehärtet und geglättet wird.

Gemäß der Erfindung weist die Oberfläche der Schicht eine Endrauhigkeit Ra ≤ 4,0 µm auf. Dadurch werden Microbendings der darauf liegenden Glasfaser vermieden.

Vorteilhafterweise kann die zumindest eine Glasfaser vollständig oder abschnittsweise auf die Oberfläche der Schicht aufgeklebt sein, was die Herstellung der Walze vereinfacht und die Glasfaser vor Beschädigungen während des Herstellungsprozesses schützt.

Bevorzugt kann die erfindungsgemäße Walze als Presswalze, Formierwalze, Leitwalze oder Tambour zur Anwendung kommen.

Die Erfindung wird nachfolgend anhand eines bevorzugten Ausführungsbeispiels ohne Einschränkung der Allgemeinheit näher beschrieben. In den Figuren zeigen:
- Fig. 1: eine schematische Ansicht einer Walze mit einem faseroptischen Sensorsystem gemäß dem Stand der Technik, und
- Fig. 2A-B: eine stark schematisierte vergleichende Darstellung eines Walzenbezuges gemäß dem Stand der Technik und mit den erfindungsgemäßen Maßnahmen.

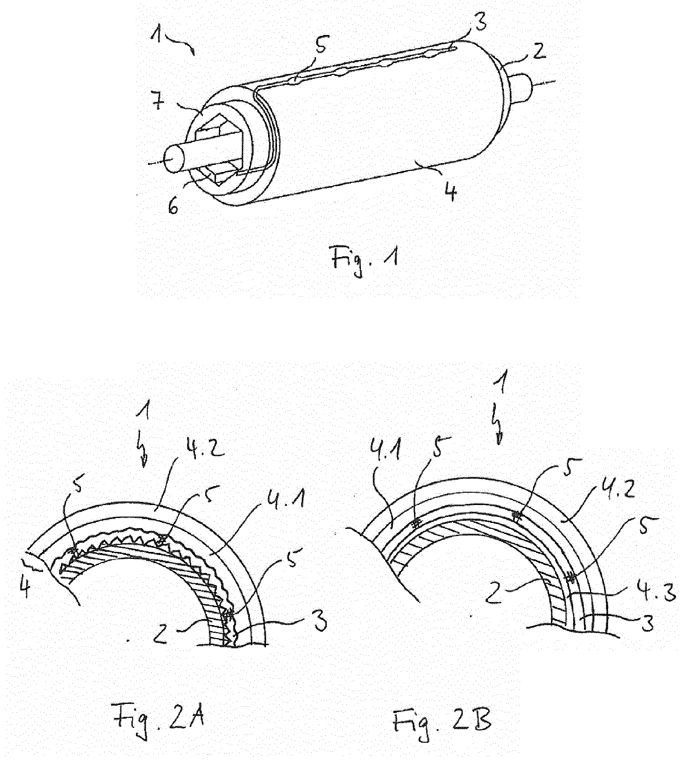

Faseroptische Sensorsysteme mit Glasfasern, die über eingeschriebene Bragg-Gitter verfügen, sind seit geraumer Zeit bekannt. Gewöhnlich wird, wie in Fig. 1 zur besseren Verständlichkeit der erfindungsgemäßen Maßnahmen stark schematisiert dargestellt, in eine Walze 1, welche einen harten Walzenkern 2 aufweist, der beispielsweise aus einem Metall oder einem Faserverbundwerkstoff bestehen kann, zumindest eine Glasfaser 3 aufgelegt und dann mit einem Walzenbezug 4 abgedeckt. Alternativ kann die zumindest eine Glasfaser 3 auch zwischen verschiedenen Schichten des Walzenbezuges 4 angeordnet sein oder in einer der Schichten eingebettet sein. Die genaue Anordnung der Glasfaser 3 hängt dabei von der Beschaffenheit des Walzenbezuges 4 ab.

In der Glasfaser 3 sind mehrere Bereiche mit Sensoren 5 versehen, welche in Form von in die Glasfaser 3 eingeschriebener Bragg-Gitter ausgebildet sind. Diese sind so ausgeführt, dass sie bei unterschiedlichen Frequenzen einer breitbandfrequenten Lichtquelle reflektiv sind, so dass aufgrund der Wellenlänge des reflektierten Lichts eine Aussage darüber ermöglicht wird, von welchem der Sensoren 5 das Licht reflektiert wurde. Wird der Walzenbezug 4 beispielsweise durch eine Gegenwalze in einem Walzennip verformt, verformen sich auch die Sensoren 5 und führen zu einer Frequenzverschiebung des reflektierten Lichts. Aus dem Ausmaß der Verschiebung kann auf die einwirkenden Kräfte geschlossen werden.

In Figur 1 ist zur Verdeutlichung der vorstehend beschriebenen Zusammenhänge eine Walze 1 mit einer Glasfaser 3 mit insgesamt vier Sensoren 5 dargestellt. Eine Lichtquelle 6 und eine Auswerteeinheit 7 sind links in der Figur angedeutet.

Wie bereits weiter oben beschrieben, ist das Hauptproblem faseroptischer Sensorsysteme darin zu sehen, dass Biegungen der Glasfaser 3 zu Auskoppelung des reflektierten Lichts und somit zu einer Verminderung der Intensität desselben führen. Die Abschwächung kann dabei so stark werden, dass die Signale weit von der eingekoppelten Lichtquelle 6 entfernter Sensoren 5 nicht mehr über die Nachweisgrenze steigen und somit von diesen Sensoren 5 kein verwertbares Signal empfangen werden kann. Folglich ist die Überwachung einer mit einem derartigen Sensorsystem bestückten Walze 1 nur mehr lückenhaft bzw. aufgrund der zunehmenden Entfernung der Sensoren 5 von der Lichtquelle 6 nur mehr in deren Nähe möglich. Die der Lichtquelle 6 nächstgelegenen Sensoren 5 werden die stärksten Signale liefern, während axial entfernte Bereiche - in Figur 1 somit rechts - zunehmend schwächere Intensitäten zurückmelden und noch weiter entferntere Sensoren 5 keine Signale mehr liefern. In diesem Bereich auftretende Probleme wie beispielsweise eingelaufene oder schief stehende Walzen 1, Beschädigungen des Walzenbezuges 4 oder Temperaturunterschiede können somit unentdeckt bleiben und nachfolgend zu Problemen beim Betrieb der Maschine oder in der Qualität des Endproduktes führen.

Die Biegungen der Glasfaser 3 können dabei sowohl im makroskopischen wie im mikroskopischen Bereich liegen. Im makroskopischen Bereich ist insbesondere die Empfindlichkeit der Glasfaser 3 auf kleine Krümmungsradien bei der Verlegung der Glasfaser 3 auf dem Walzenkern 2 oder im Walzenbezug 4 eine Gefahr, die zum Bruch der Glasfaser 3 führen kann. Glasfasern 3 sind sehr stabil auf Zugkräfte, jedoch empfindlich gegen zu starke Krümmung.

Im mikroskopischen Bereich sind die Biegungen der Glasfaser 3 nicht so stark, als dass die Gefahr des Faserbruchs besteht, jedoch wird durch eine Vielzahl sog. Microbendings die Lichtausbeute des reflektierten Lichts stark geschwächt. In der Folge sind nicht mehr alle Sensoren 5 auswertbar. Dies tritt aufgrund des spezifischen Herstellungsprozesses insbesondere bei Walzen 1 auf, welche einen Gummiunterbau und/oder einen aus Gummi bestehenden Walzenbezug 4 aufweisen.

Walzen 1 mit einem Walzenbezug 4 aus einem Gummiwerkstoff wie NBR, HNBR etc. weisen gewöhnlich auf dem Walzenkern 2 einen mehrschichtigen Aufbau auf, welcher als Unterbau eine erste Schicht 4.1 aus Hartgummi und zumindest eine darauf ausgebildete Funktionsschicht 4.2 aus einer gleichen oder anderen Gummimischung aufweist. Die Härte der ersten Schicht 4.1 liegt gewöhnlich in einem Bereich von 1 bis 15 P&J, während die Funktionsschicht eine Härte von 40 ShoreA bis 80 ShoreD aufweisen kann. Damit die erste Schicht 4.1 gut auf dem Walzenkern 2 haftet, wird dieser mittels einer geeigneten Vorbehandlung wie Sandstrahlen aufgeraut.

Wegen der Delaminationsneigung und aufgrund der Empfindlichkeit der Sensoren 5 ist es angezeigt, die Glasfaser 3 direkt auf den Walzenkern 2 aufzulegen und die erste Schicht 4.1 darauf aufzubauen. Dies führt jedoch dazu, dass die Glasfaser 3 auf dem rauen Walzenkern 2 liegt und bei dem nachfolgenden Vulkanisationsprozess, welcher zu einer Schrumpfung der einzelnen Schichten 4.1 und 4.2 des Walzenbezuges 4 führt, an die mikroskopisch raue Oberfläche des Walzenkerns 2 angepresst wird. Die Biegungen, die die Glasfaser 3 dadurch beschreibt, gefährden zwar nicht die Glasfaser 3 im Sinne eines zu befürchtenden Faserbruches, jedoch wird an jeder Biegung aufgrund der optischen Eigenschaften des Glasfaser 3 Licht aus dieser ausgekoppelt und geht somit verloren. Eine maximale Lichtausbeute ist in einer gestreckt und gerade liegenden Glasfaser 3 zu erwarten.

In Fig. 2A ist ein solchermaßen angerauter Walzenkern 2 ausschnittsweise dargestellt. Ein Abschnitt einer Glasfaser 3 mit Sensoren 5 liegt auf dem rauen Walzenkern auf und ist entsprechend mit vielen kleinen Biegungen versehen. Licht wird durch die Microbendings aus der Glasfaser 3 ausgekoppelt und verlässt diese, was zu Intensitätsabfall führt.

Das oben beschrieben Problem wird erfindungsgemäß durch einen besonderen Aufbau der Walze 1 und eine zusätzliche Präparation der Oberfläche des Walzenkerns 2, auf welcher die Sensoren 5 angeordnet sind, gelöst.

Die Walze 1 wird, statt mittels Sandstrahlens aufgeraut zu werden, mit einer Schicht 4.3 versehen, die im Ausführungsbeispiel aus mit Epoxydharz getränkten Glasfasergeweben oder Faserrovings besteht, die auf den Walzenkern 2 gewickelt werden. Alternativ kann die Schicht 4.3 auch aus einer geglätteten, überdrehten Hartgummilage bestehen. Die so vorbereitete Walze 1 wird ausgehärtet, abgedreht und geglättet.

Das Abdrehen kann dabei beispielsweise mittels eines Diamant-Messers bis zu einem Rauhwert Rₐ von < 5,5 µm erfolgen. Anschließend wird die solchermaßen abgedrehte Schicht 4.3 mittels Schleifpapier auf eine Endrauhigkeit Rₐ ≤ 4,0 µm geglättet. Auf die so vorbereitete Schicht 4.3 können die Glasfasern 3 mit den Sensoren 5 in einfacher Weise direkt aufgeklebt werden. Dies ist schematisiert in Fig. 2B in gleicher Darstellung wie in Fig. 2A gezeigt.

Es können dabei beliebige Anordnungen gewählt werden, wie Schleifen, Spiralen, Geraden o.ä.

Während eine Epoxydharzschicht bei Gummiwalzen eher die Ausnahme darstellt, werden Polyurethan- und Faserverbundwalzen regulär auf diese Art und Weise mit einem Unterbau versehen. Das Überdrehen und Abschleifen des Unterbaus auf eine definierte Rauhigkeit ist jedoch auch hier eher die Ausnahme.

Nach dem Aufbringen der Glasfasern 3 mit den Sensoren 5 kann der Walzenbezug 4 in üblicher Weise mit der zumindest einen Funktionsschicht 4.2 entweder mit einer Schicht 4.1 oder direkt mit der Funktionsschicht 4.2 auf der Schicht 4.3 aufgebaut und vulkanisiert werden.

Die Erfindung ist nicht auf das dargestellte Ausführungsbeispiel begrenzt.

## Patentansprüche

1. Walze (1) für eine Maschine zur Herstellung, Veredelung oder Weiterverarbeitung einer Faserbahn wie einer Papier-, Karton- oder Tissuebahn, wobei die Walze (1) einen Walzenkern (2) und einen auf dem Walzenkern (2) angeordneten Walzenbezug (4) aufweist, welcher Walzenbezug (4) zumindest eine Funktionsschicht (4.2) aufweist, die zum Kontaktieren der Faserbahn geeignet ist und zumindest teilweise aus einem Gummimaterial besteht, und mit einem faseroptischen Sensorsystem mit zumindest einer Glasfaser (3), **dadurch gekennzeichnet, dass** auf dem Walzenkern (2) unter der zumindest einen Funktionsschicht (4.2) eine glatte Schicht (4.3) aufgebracht ist, wobei die Oberfläche der glatten Schicht (4.3) eine Endrauhigkeit Rₐ ≤ 4,0 µm aufweist und dass die zumindest eine Glasfaser (3) auf der glatten Schicht (4.3) angeordnet ist.

2. Walze nach Anspruch 1, **dadurch gekennzeichnet, dass** die glatte Schicht (4.3) aus einem faserverstärkten Epoxydharz oder aus einer geglätteten, überdrehten Hartgummilage besteht.

3. Walze nach Anspruch 1 oder 2, **dadurch gekennzeichnet, dass** auf der glatten Schicht (4.3) und unter der Funktionsschicht (4.2) eine weitere Schicht (4.1) vorgesehen ist.

4. Walze nach einem der Ansprüche 1 bis 3, **dadurch gekennzeichnet, dass** die glatte Schicht (4.3) aus Faserrovings oder Fasergewebe besteht, welche mit einem Epoxidharz durchtränkt sind.

5. Walze nach Anspruch 4, **dadurch gekennzeichnet, dass** das Faserroving oder das Fasergewebe aus Glasfasern, Kohlefasern, Aramidfasern, Polyester oder Polyamid oder Mischungen daraus besteht.

6. Walze nach einem der Ansprüche 1 bis 5, **dadurch gekennzeichnet, dass** die glatte Schicht (4.3) gehärtet und geglättet ist.

7. Walze nach einem der Ansprüche 1 bis 6, **dadurch gekennzeichnet, dass** die zumindest eine Glasfaser (3) auf die Oberfläche der glatten Schicht (4.3) aufgeklebt ist.

8. Walze nach einem der vorstehenden Ansprüche zur Verwendung als Presswalze, Formierwalze, Leitwalze oder Tambour.

## Claims

1. Roller (1) for a machine for producing, finishing or processing a fibrous web such as a paper web, a cardboard web or a tissue web, wherein the roller (1) has a roller core (2) and a roller covering (4) that is disposed on the roller core (2), said roller covering (4) having at least one functional layer (4.2) which is suitable for contacting the fibrous web and at least in part is composed of a rubber material, and having a fibre-optic sensor system having at least one glass fibre (3), **characterized in that** a smooth layer (4.3) is disposed on the roller core (2) below the at least one functional layer (4.2), wherein the surface of the smooth layer (4.3) has a final roughness Rₐ ≤ 4.0 µm, and **in that** the at least one glass fibre (3) is disposed on the smooth layer (4.3).

2. Roller according to Claim 1, **characterized in that** the smooth layer (4.3) is composed of a fibre-reinforced epoxy resin or from a smoothed skimmed hard rubber tier.

3. Roller according to Claim 1 or 2, **characterized in that** a further layer (4.1) is provided on the smooth layer (4.3) or below the functional layer (4.2) .

4. Roller according to one of Claims 1 to 3, **characterized in that** the smooth layer (4.3) is composed of fibre rovings, or a woven fibre fabric, which are/is impregnated with an epoxy resin.

5. Roller according to Claim 4, **characterized in that** the fibre roving or the woven fibre fabric is composed of glass fibres, carbon fibres, aramid fibres, polyester, or polyamide, or mixtures thereof.

6. Roller according to one of Claims 1 to 5, **characterized in that** the smooth layer (4.3) is hardened and smoothed.

7. Roller according to one of Claims 1 to 6, **characterized in that** the at least one glass fibre (3) is adhesively bonded to the surface of the smooth layer (4.3).

8. Roller according to one of the preceding claims for use as a press roller, a forming roller, a guide roller, or a reel drum.

## Revendications

1. Rouleau (1) pour une machine de fabrication, amélioration ou traitement ultérieur d'une bande de matière fibreuse telle qu'une bande de papier, de carton ou de papier-tissu, le rouleau (1) présentant un noyau de rouleau (2) et un revêtement de rouleau (4) disposé sur le noyau de rouleau (2), lequel revêtement de rouleau (4) présente au moins une couche fonctionnelle (4.2) qui est prévue pour venir en contact avec la bande de matière fibreuse et qui se compose au moins en partie d'un matériau en caoutchouc, et comprenant un système de capteur à fibre optique avec au moins une fibre de verre (3), **caractérisé en ce qu'**une couche lisse (4.3) est appliquée sur le noyau de rouleau (2) sous l'au moins une couche fonctionnelle (4.2), la surface de la couche lisse (4.3) présentant une rugosité finale Rₐ ≤ 4,0 µm et **en ce que** l'au moins une fibre de verre (3) est disposée sur la couche lisse (4.3).

2. Rouleau selon la revendication 1, **caractérisé en ce que** la couche lisse (4.3) se compose d'une résine époxy renforcée par des fibres ou d'une couche de caoutchouc dur lissée, rectifiée.

3. Rouleau selon la revendication 1 ou 2, **caractérisé en ce qu**'une couche supplémentaire (4.1) est prévue sur la couche lisse (4.3) et en dessous de la couche fonctionnelle (4.2).

4. Rouleau selon l'une quelconque des revendications 1 à 3, **caractérisé en ce que** la couche lisse (4.3) se compose de fibres roving ou de tissu fibreux, qui sont imprégnés avec une résine époxy.

5. Rouleau selon la revendication 4, **caractérisé en ce que** la fibre roving ou le tissu fibreux se compose de fibres de verre, de fibres de carbone, de fibres d'aramide, de polyester ou de polyamide ou de mélanges de ceux-ci.

6. Rouleau selon l'une quelconque des revendications 1 à 5, **caractérisé en ce que** la couche lisse (4.3) est durcie et lissée.

7. Rouleau selon l'une quelconque des revendications 1 à 6, **caractérisé en ce que** l'au moins une fibre de verre (3) est collée sur la surface de la couche lisse (4.3).

8. Rouleau selon l'une quelconque des revendications précédentes, destiné à l'utilisation en tant que rouleau de pressage, rouleau de formage, rouleau conducteur ou tambour.
